# EUROPEAN PATENT SPECIFICATION

(11) **EP 2 511 115 B1**
(45) Date of publication and mention of the grant of the patent: **02.07.2014**
(21) Application number: 12163744.1
(22) Date of filing: 11.04.2012
(51) Int. Cl.: B60H 1/32

(54) **Method pertaining to an air conditioning system, and a regulating system for such an air conditioning system**
Verfahren für eine Klimaanlage und Regelsystem für eine solche Klimaanlage
Procédé se rapportant à un système de conditionnement d'air et système de régulation pour un tel système de conditionnement d'air

(30) Priority: 12.04.2011 SE 1150319
(43) Date of publication of application: 17.10.2012
(73) Proprietor: Scania CV AB (publ), 151 87 Södertälje (SE)
(72) Inventor: Österlund, Henrik, 643 30 VINGÅKER (SE); Bergstrand, Jan-Åke, 641 53 KATRINEHOLM (SE)

(56) References cited:
- EP-A1- 1 077 146
- DE-A1-102004 008 974
- DE-A1-102008 047 294
- US-A- 6 145 325

## Description

### Field of the invention

The present invention relates to a method and a system such as disclosed in DE 102008047294 A1.

### Background to the invention

A conventional air conditioning (AC) system for a vehicle comprises usually a compressor, a condenser, pipelines, an evaporator and an accumulator tank. The outlet of the compressor is connected to the inlet of the condenser, the outlet of the condenser is connected via the pipelines to the inlet of the evaporator, and the outlet of the evaporator is connected via the tank to the inlet of the compressor. The compressor is driven by the vehicle's engine and is connected for example by an electromagnetic clutch. Connection and disconnection are controlled inter alia according to desired temperature in the vehicle.

To ensure reliable and durable operation of the AC system, compressors need to be run (activated) at regular intervals so that seals etc. are lubricated even when no cooling is needed. This is well known and is presumably catered for in most vehicle manufacturers' systems.

To achieve due activation of the AC system, the whole system needs to be started up and run for at least a number of minutes. How long the compressor needs to be run depends on make and model.

The following problems have been identified with regard to activation of an AC compressor:
- Activating it "unnecessarily often" may cause wear on many parts of the system, e.g. compressor clutch, the compressor itself, fans etc.
- Activating it when the vehicle is idling and there is consequently less charging of the batteries puts them under heavy load in that condenser fans which consume a great deal of current have to be started up when the AC is activated.
- Activating it in an "uncontrolled" way despite the climate control having been switched off entails risk of harm to persons if for example cracks occur during servicing of the vehicle.
- Starting the AC system at too low a temperature entails risk of ice formation which might damage components.

The following patent specifications have been identified within the technical field:
US 3738118 A refers to a control system for an air conditioning system in a vehicle. The control system is equipped with a relay which connects the compressor for a predetermined period each time the vehicle is used, and the period of connection is long enough to achieve lubrication of the compressor's seals.
US 3844684 A refers to a device which automatically activates the compressor for an air conditioning system in a vehicle in order to effect lubrication of the compressor's movable parts. The compressor is activated when the engine speed drops below a certain level and the temperature is higher than 10 °C.
US 4424682 A refers to a control system for the compressor in an air conditioning system for a vehicle. Irrespective of whether cooling is needed, the control system connects the compressor for a predetermined period when the vehicle is travelling below a certain speed and the ambient temperature is above a chosen level.

In the light of the above problems pertaining to activation as currently conducted, and against the background of how it is conducted according to the specifications described above, the general object of the present invention is to propose an improved form of activation of air conditioning systems for vehicles which eliminates the problems described.

### Summary of the invention

The above objects are achieved with the invention defined by the independent claims.

Preferred embodiments are defined by the dependent claims.

The method according to the present invention is preferably implemented in software in one or more of the vehicle's control units and may be briefly described as follows:
- Activation takes place for a certain period (e.g. 3 minutes) and thereafter when a certain time (e.g. a week) has passed since the AC system was last activated, irrespective of whether by activation or in normal operation. For activation to register as approved, it must proceed for the period indicated (e.g. 3 minutes).
- Activation preferably only takes place when the outside temperature has been above a certain level (e.g. +5 °C) for a certain period (e.g. 2 hours).
- Activation preferably only takes place when the vehicle (e.g. a bus) is in motion, there is good battery charging and no ongoing servicing is likely.

The invention affords inter alia following advantages:
- Not running the AC more than necessary reduces wear and energy consumption.
- Not running the AC unnecessarily when the vehicle is idling results in more even load on the batteries (less risk of their "running out").
- Less risk of damage during servicing and repairs.
- Activation within a more favourable engine speed range.
- Possibility of individual activation of various AC systems in the same vehicle.

### Brief description of drawings

Figure 1 is a flowchart illustrating the present invention.
Figure 2 is a flowchart illustrating a first embodiment of the present invention.
Figure 3 is a flowchart illustrating a second embodiment of the present invention.
Figure 4 is a block diagram illustrating the present invention.

### Detailed description of preferred embodiments of the invention

The invention will now be described in detail with reference to the attached drawings.

The regulating system according to the invention is intended to regulate an air conditioning system which is appropriate for fitting in a vehicle which may be a bus, truck, car or some other vehicle.

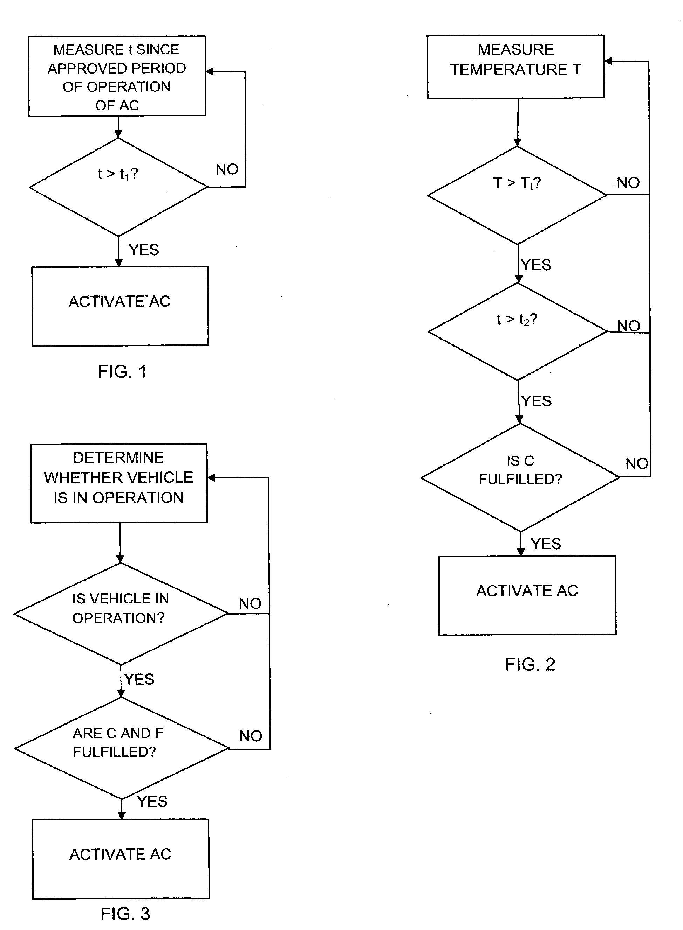

Figure 1 illustrates a method according to the invention intended to be implemented in relation to an air conditioning system for a vehicle. The method comprises:
a) measuring the time t since an approved period of operation of the air conditioning system,
b) comparing the measured time t with a predetermined first interval t₁,
c) activating the air conditioning system if the measured time exceeds said predetermined interval t₁.

The first interval t₁ is preferably within the range 4-10 days, denoting the interval between approved activations.

According to the present invention illustrated by the flowchart in Figure 2, the method comprises:
d) measuring current ambient temperature T,
e) comparing the measured ambient temperature with a predetermined temperature limit Tₜ,
   and activation of the air conditioning system is effected if condition c) is fulfilled and if
f) the current ambient temperature exceeds, and has exceeded, the predetermined temperature limit Tₜ for at least a predetermined second interval t₂.

Activation is thus effected if a predetermined time has passed since the last approved activation (condition c) above) and if the temperature exceeds the predetermined limit Tₜ, which may for example be within the range 3-7 °C, e.g. 5 °C, and has been above that limit for at least a predetermined second interval t₂ which is within the range 1-4 hours, e.g. 3 hours.

According to the invention illustrated by the flowchart in Figure 3, activation of the air conditioning system is effected if condition c) and, if applicable, condition f), i.e. if temperature measurement is done, are fulfilled, and if
g) the vehicle is in operation.

In this context a vehicle is deemed to be in operation if its current speed v exceeds a predetermined level vₜ within the range 5-15 km/h, e.g. 10 km/h. It is of course also a requirement that the vehicle's engine is running.

Ongoing activation is preferably halted if the vehicle's current speed falls below the predetermined level vₜ. In certain contexts it is not appropriate to halt any ongoing activation, e.g. when driving in urban traffic with frequent stops at red traffic signals.

It is possible to set further requirements or operating conditions, generally referred to as
h), which have to be fulfilled for activation of the air conditioning system to be possible. An example of such a requirement is that none of the vehicle's apertures are open when activation is effected.

An approved period of operation of the air conditioning system means operation for longer than a predetermined operating time tₘ when condition f) is fulfilled, i.e. temperature higher than the specified threshold for at least the second time-interval. The predetermined operating time is for example within the range 3-10 minutes but does of course vary depending on the model and make of the air conditioning system. Upon activation, the air conditioning system is connected for this predetermined operating time tₘ.

The method described above may be implemented both by logic circuits and by software and by a combination of hardware and software. The invention thus comprises also a computer programme product which is appropriate for running on a predetermined processor device for a vehicle and which comprises computer programme steps for effecting the method according to at least some of the steps described.

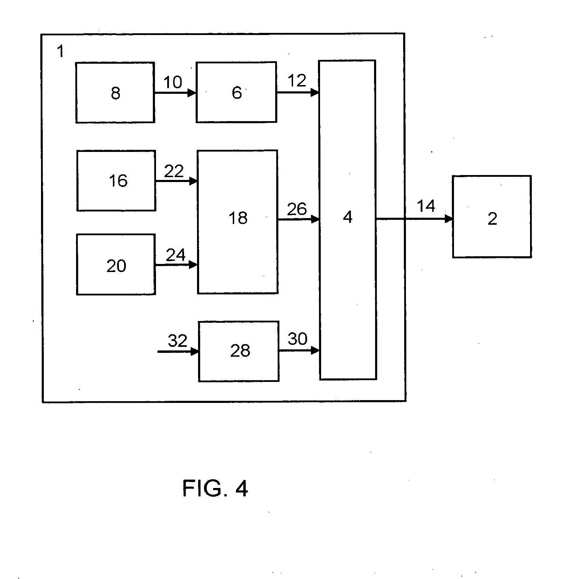

A regulating system 1 according to the present invention for an air conditioning system 2 in a vehicle will now be described with reference to the schematic block diagram in Figure 4.

The regulating system 1 comprises a control unit 4, a first comparison unit 6 and a first time measurement unit 8.

The first time measurement unit 8 is arranged to measure the time t since an approved period of operation of the air conditioning system and to deliver to the first comparison unit 6 a first time signal 10 containing information about the time t. The comparison unit is arranged to compare the measured time t with a predetermined first interval t₁ and, if the measured time exceeds said predetermined interval t₁, to deliver a first control signal 12 to the control unit, which is arranged to initiate activation of the vehicle's air conditioning system if said first control signal 12 is received. This is done by generating an initiating signal 14 which is conveyed to the air conditioning system. Said first interval t₁ is within the range 4-10 days.

The regulating system comprises also a temperature measurement unit 16, a second comparison unit 18 and a second time measurement unit 20, and the temperature measurement unit 16 is arranged to measure current ambient temperature T and to deliver to the second comparison unit 18 a temperature signal 22 containing information about the temperature T. Current temperatures may for example be available via the vehicle's CAN system.

The second comparison unit 18 compares the measured ambient temperature T with the predetermined limit Tₜ which may for example be within the range 3-7°C, e.g. 5°C.

If the measured current ambient temperature exceeds, and has exceeded, the predetermined limit Tₜ for at least a predetermined second interval t₂, the second comparison circuit 18 delivers a second control signal 26 to the control unit 4, which is arranged to initiate activation of the vehicle's air conditioning system 2 if said first control signal 12 and second control signal 26 are received. The second interval t₂ is within the range 1-4 hours, e.g. 3 hours.

The system comprises also a third comparison unit 28 arranged to generate a third control signal 30 indicating that the vehicle is in operation, and the control unit 4 is arranged to initiate activation of the vehicle's air conditioning system 2 if the first control signal 12 and the third control signal 30 are received and if preferably also, in cases where temperature measurement is done, the second control signal 26 is also received. The third comparison unit 28 is arranged to receive a speed signal 32 which indicates the vehicle's current speed. The speed signal is for example received from the vehicle's CAN bus.

The vehicle is deemed to be in operation if its current speed v is above a predetermined level vₜ which is for example within the range 5-15 km/h, e.g. 10 km/h.

Ongoing activation is halted if the vehicle's current speed v is below this predetermined level vₜ. This is achieved by the third control signal no longer being received by the control unit 4, which thereupon halts the activation.

According to a further embodiment of the invention, activation of the air conditioning system may be effected if at least the first control signal is received by the control unit and one or more further operating conditions are fulfilled, e.g. an indication that apertures of the vehicle are not closed.

Approved period of operation of the air conditioning system means operation for longer than a predetermined operating time tₘ and temperature above the specified threshold for at least the second interval. The predetermined operating time is for example within the range 3-10 minutes but does of course vary depending of the model and make of the air conditioning system. Upon activation, the air conditioning system is connected for this predetermined operating time tₘ.

Certain vehicles may have a number of different air conditioning systems installed. This is particularly common in buses, in which for example the driver's space may have a separate system and the remainder of the bus be catered for by one or more other systems in order for example to have different climate zones in the bus. The regulating system according to the invention may of course be adapted and implemented for such a vehicle.

The present invention is not restricted to the preferred embodiments described above.

## Claims

1. A method pertaining to an air conditioning system for a vehicle, comprising:
a) measuring the time t since an approved period of operation of the air conditioning system,
b) comparing the measured time t with a predetermined first interval t₁,
d) measuring the current ambient temperature T,
e) comparing the measured ambient temperature with a predetermined temperature limit Tₜ,
c) activating the air conditioning system if the measured time exceeds said predetermined interval t₁, and if
f) the current ambient temperature exceeds, and has exceeded, the predetermined temperature limit Tₜ for at least a predetermined second interval t₂, and if
g) the vehicle is in operation,
the vehicle being in operation if its current speed v is above a predetermined level vₜ.

2. A method according to claim 1, in which vₜ is within the range 5-15 km/h.

3. A method according to claim 2, in which ongoing activation is halted if the vehicle's current speed goes below said predetermined level vₜ.

4. A method according to any one of the foregoing claims, in which said first interval t₁ is within the range 4-10 days.

5. A method according to either of claims 1 and 2, in which said second interval t₂ is within the range 1-4 hours.

6. A method according to any one of the foregoing claims, in which activation of the air conditioning system is effected if
h) one or more further operating conditions are fulfilled.

7. A method according to any one of the foregoing claims and depending on claim 1, in which an approved period of operation of the air conditioning system means operation for longer than a predetermined operating time tₘ when f) is fulfilled.

8. A method according to any one of claims 1-7, in which upon activation the air conditioning system is connected for a predetermined operating time tₘ.

9. A regulating system (1) for an air conditioning system (2) in a vehicle, comprising a control unit (4), a first comparison unit (6) and a first time measurement unit (8),
**characterised in that** the first time measurement unit (8) is arranged to measure the time t since an approved period of operation of the air conditioning system and to deliver to the first comparison unit (6) a first time signal (10) containing information about the time t, which comparison unit is arranged to compare the measured time t with a predetermined first interval t₁, comprising a temperature measurement unit (16), a second comparison unit (18) and a second time measurement unit (20), such that the temperature measurement unit is adapted to measuring current ambient temperature T and to delivering to the second comparison unit (18) a temperature signal (22) containing information about the temperature T, the second comparison unit (18) is adapted to comparing the measured ambient temperature T with a predetermined limit Tₜ, and, if the measured time exceeds said predetermined interval t₁, to deliver a first control signal (12) to the control unit, which is arranged to initiate activation of the vehicle's air conditioning system if said first control signal (12) is received and, , if the measured current ambient temperature exceeds, and has exceeded, the predetermined limit Tₜ for at least a predetermined second interval t₂, to delivering a second control signal (26) to the control unit, which is arranged to initiate activation of the vehicle's air conditioning system (2) if said first and second control signals (12, 26) are received, the system further comprises a third comparison unit (28) arranged to generate a third control signal (30) indicating that the vehicle is in operation, and the control unit (4) is arranged to initiate activation of the vehicle's air conditioning system (2) if said first control signal (12) and, if applicable, a second control signal (26) and a third control signal (30) are received, the vehicle being in operation if its current speed v is above a predetermined level vₜ.

10. The regulating system according to claim 9, in which vₜ is within the range 5-15 km/h.

11. The regulating system according to claim 9 or 10, in which any ongoing activation is halted if the vehicle's current speed goes below said predetermined level vₜ.

12. The regulating system according to any one of claims 9-11, in which said first interval t₁ is within the range 4-10 days.

13. The regulating system according to any one of claims 9-12 and depending on claim 9, in which said second interval t₂ is within the range 1-4 hours.

14. The regulating system according to any one of claims 9-13, in which activation of the air conditioning system is effected if one or more further operating conditions are fulfilled.

15. The regulating system according to any one of claims 9-14, in which an approved period of operation of the air conditioning system means operation for longer than a predetermined operating time tₘ when the vehicle is in operation.

16. The regulating system according to any one of claims 9-15, in which upon activation the air conditioning system is connected for a predetermined operating time tₘ.

17. A vehicle provided with one or more regulating systems according to claims 9-16.

18. A computer programme product which is adapted to being run on a computer programme processor device for a vehicle and which comprises computer programme steps for effecting the method according to any one of claims 1-8.

## Patentansprüche

1. Verfahren für eine Klimaanlage für ein Fahrzeug, umfassend
a) Messen der Zeit t seit einer anerkannten Betriebsperiode der Klimaanlage,
b) Vergleichen der gemessenen Zeit t mit einem vorbestimmten ersten Intervall t₁,
d) Messen der aktuellen Umgebungstemperatur T,
e) Vergleichen der gemessenen Umgebungstemperatur mit einem vorbestimmten Temperaturgrenzwert Tₜ,
c) Aktivieren der Klimaanlage, wenn die gemessene Zeit das vorbestimmte Intervall t₁ überschreitet, und wenn
f) die aktuelle Umgebungstemperatur den vorbestimmten Temperaturgrenzwert Tₜ für mindestens ein vorbestimmtes zweites Intervall t₂ übersteigt, und überstiegen hat, und wenn
g) das Fahrzeug in Betrieb ist,
wobei das Fahrzeug in Betrieb ist, wenn seine aktuelle Geschwindigkeit v über einem vorbestimmten Wert vₜ liegt.

2. Verfahren nach Anspruch 1, bei dem vₜ in dem Bereich 5 bis 15 km/h liegt.

3. Verfahren nach Anspruch 2, bei dem andauernde Aktivierung unterbrochen wird, wenn die Geschwindigkeit des Fahrzeugs unter den vorbestimmten Wert vₜ fällt.

4. Verfahren nach einem der vorangehenden Ansprüche, bei dem das genannte erste Intervall t₁ in dem Bereich 4 bis 10 Tage liegt.

5. Verfahren nach Anspruch 1 oder 2, bei dem das genannte zweite Intervall t₂ in dem Bereich 1 bis 4 Stunden liegt.

6. Verfahren nach einem der vorangehenden Ansprüche, bei dem die Aktivierung der Klimaanlage durch
h) die Erfüllung einer oder mehrerer Betriebsbedingungen,
bewirkt wird.

7. Verfahren nach einem der vorangehenden Ansprüche und abhängig von Anspruch 1, bei dem die anerkannte Betriebsperiode der Klimaanlage bedeutet, dass der Betrieb länger als die vorbestimmte Betriebszeit tₘ ist, wenn f) erfüllt ist.

8. Verfahren nach einem der Ansprüche 1 bis 7, bei welchem die Klimaanlage durch Aktivierung für eine vorbestimmte Betriebszeit tₘ angeschlossen wird.

9. Regelungssystem (1) für eine Klimaanlage (2) in einem Fahrzeug, das eine Steuerungseinheit (4), eine erste Vergleichseinheit (6) und eine erste Zeitmesseinheit (8) umfasst,
**dadurch gekennzeichnet, dass** die erste Zeitmesseinheit (8) dazu ausgebildet ist, die Zeit t seit einer anerkannten Betriebsperiode der Klimaanlage zu messen und der ersten Vergleichseinheit (6) das erste Zeitsignal (10) zu liefern, welches Informationen über die Zeit t enthält, wobei die Vergleichseinheit dazu ausgebildet ist, die gemessene Zeit t mit dem vorbestimmten ersten Intervall t₁ zu vergleichen, umfassend eine Temperaturmesseinheit (16), eine zweite Vergleichseinheit (18) und eine zweite Zeitmesseinheit (20), derart dass die Temperaturmesseinheit dazu ausgebildet ist, die aktuelle Umgebungstemperatur T zu messen und der zweiten Vergleichseinheit (18) ein Temperatursignal (22) zu liefern, welches Informationen über die Temperatur T enthält, wobei die zweite Vergleichseinheit (18) dazu ausgebildet ist, die gemessene Umgebungstemperatur T mit einem vorbestimmten Grenzwert Tₜ zu vergleichen, und dann, wenn die gemessene Zeit das vorbestimmte Intervall t₁ überschreitet, der Steuerungseinheit ein erstes Steuersignal (12) zu liefern, welches dazu ausgebildet ist, die Aktivierung der Klimaanlage des Fahrzeugs zu veranlassen, wenn das genannte erste Steuersignal empfangen wird und dann, wenn die gemessene aktuelle Umgebungstemperatur den vorbestimmten Grenzwert Tₜ für mindestens das vorbestimmte zweite Intervall t₂ überschreitet, und überschritten hat, der Steuereinheit ein zweites Steuersignal (26) zu liefern, welches dazu ausgebildet ist, die Aktivierung der Klimaanlage (2) des Fahrzeugs zu veranlassen, wenn das genannte erste und zweite Steuersignal (12, 26) empfangen werden, wobei das System weiter umfasst eine dritte Vergleichseinheit (28), die dazu ausgebildet ist, ein drittes Steuersignal (30) zu erzeugen, welches anzeigt, dass das Fahrzeug in Betrieb ist, und die Steuereinheit (4) dazu ausgebildet ist, die Aktivierung der Klimaanlage (2) des Fahrzeugs zu veranlassen, wenn das genannte erste Steuersignal (12) und, wenn zutreffend, ein zweites Steuersignal (26) und ein drittes Steuersignal (30) empfangen werden, wobei das Fahrzeug in Betrieb ist, wenn seine aktuelle Geschwindigkeit v über einem vorbestimmten Wert vₜ liegt.

10. Regelungssystem nach Anspruch 9, bei dem vₜ in dem Bereich von 5 bis 15 km/h liegt.

11. Regelungssystem nach Anspruch 9 oder 10, bei dem jegliche andauernde Aktivierung unterbrochen wird, wenn die aktuelle Geschwindigkeit des Fahrzeugs unter den genannten vorbestimmten Wert vₜ fällt.

12. Regelungssystem nach einem der Ansprüche 9 bis 11, bei dem das genannte erste Intervall t₁ in dem Bereich 4 bis 10 Tage liegt.

13. Regelungssystem nach einem der Ansprüche 9 bis 12 und abhängig von Anspruch 9, bei dem das genannte zweite Intervall t₂ in dem Bereich 1 bis 4 Stunden liegt.

14. Regelungssystem nach einem der Ansprüche 9 bis 13, bei dem die Aktivierung der Klimaanlage bewirkt wird, wenn eine oder mehrere Betriebsbedingungen erfüllt sind.

15. Regelungssystem nach einem der Ansprüche 9 bis 14, bei dem eine anerkannte Betriebsperiode der Klimaanlage bedeutet, dass der Betrieb länger als die vorbestimmte Betriebszeit tₘ ist, wenn das Fahrzeug in Betrieb ist.

16. Regelungssystem nach einem der Ansprüche 9 bis 15, bei dem die Klimaanlage durch Aktivierung für eine vorbestimmte Betriebszeit tₘ angeschlossen wird.

17. Fahrzeug, das ein oder mehrere Regelungssysteme nach den Ansprüche 9 bis 16 aufweist.

18. Computerprogrammprodukt, welches dazu ausgebildet ist, auf einer Computerprogrammprozessorvorrichtung für ein Fahrzeug ausgeführt zu werden und welches Computerprogrammschritte für die Bewirkung des Verfahrens nach einem der Ansprüche 1 bis 8 umfasst.

## Revendications

1. Procédé se rapportant à un système de conditionnement d'air pour un véhicule, comprenant :
a) la mesure du temps t depuis une période de fonctionnement approuvée du système de conditionnement d'air,
b) la comparaison du temps mesuré t à un premier intervalle prédéterminé t₁,
d) la mesure de la température ambiante actuelle T,
e) la comparaison de la température ambiante mesurée à une limite de température prédéterminée Tₜ,
c) l'activation du système de conditionnement d'air si le temps mesuré dépasse ledit intervalle prédéterminé t₁, et si
f) la température ambiante actuelle dépasse, et a dépassé, la limite de température prédéterminée Tₜ pendant au moins un deuxième intervalle prédéterminé t₂, et si
g) le véhicule est en fonctionnement,
le véhicule étant en fonctionnement si la vitesse actuelle v est au-dessus d'un niveau prédéterminé vₜ.

2. Procédé selon la revendication 1, selon lequel vₜ est situé à l'intérieur de la plage comprise entre 5 et 15 km/h.

3. Procédé selon la revendication 2, selon lequel une activation en cours est interrompue si la vitesse actuelle du véhicule descend en dessous dudit niveau prédéterminé vₜ.

4. Procédé selon l'une quelconque des revendications précédentes, selon lequel ledit premier intervalle t₁ est situé dans la plage comprise entre 4 et 10 jours.

5. Procédé selon l'une ou l'autre des revendications 1 et 2, selon lequel ledit deuxième intervalle t₂ est situé dans la plage comprise entre 1 et 4 heures.

6. Procédé selon l'une quelconque des revendications précédentes, selon lequel l'activation du système de conditionnement d'air est effectuée si :
h) une ou plusieurs autres conditions de fonctionnement sont satisfaites.

7. Procédé selon l'une quelconque des revendications précédentes en dépendance de la revendication 1, selon lequel une période de fonctionnement approuvée du système de conditionnement d'air signifie un fonctionnement pendant un temps plus long qu'un temps de fonctionnement prédéterminé tₘ lorsque f) est satisfaite.

8. Procédé selon l'une quelconque des revendications 1 à 7, selon lequel, lors de l'activation, le système de conditionnement d'air est connecté pendant un temps de fonctionnement prédéterminé tₘ.

9. Système de régulation (1) pour un système de conditionnement d'air (2) dans un véhicule, comprenant une unité de commande (4), une première unité de comparaison (6) et une première unité de mesure de temps (8),
**caractérisé en ce que** la première unité de mesure de temps (8) est configurée de façon à mesurer le temps t depuis une période de fonctionnement approuvée du système de conditionnement d'air et à délivrer à la première unité de comparaison (6) un premier signal de temps (10) contenant une information concernant le temps t, cette unité de comparaison étant configurée de façon à comparer le temps mesuré t à un premier intervalle prédéterminé t₁, comprenant une unité de mesure de température (16), une deuxième unité de comparaison (18) et une deuxième unité de mesure de temps (20), de telle sorte que l'unité de mesure de température soit adaptée à mesurer une température ambiante actuelle T et à délivrer à la deuxième unité de comparaison (18) un signal de température (22) contenant une information concernant la température T, la deuxième unité de comparaison (18) étant adaptée à comparer la température ambiante mesurée T à une limite prédéterminée Tₜ, et, si le temps mesuré dépasse ledit intervalle prédéterminé t₁, à délivrer un premier signal de commande (12) à l'unité de commande, qui est configurée de façon à déclencher l'activation du système de conditionnement d'air du véhicule si ledit premier signal de commande (12) est reçu, et, si la température ambiante actuelle mesurée dépasse, et a dépassé, la limite prédéterminée Tₜ pendant au moins un deuxième intervalle prédéterminé t₂, à délivrer un deuxième signal de commande (26) à l'unité de commande, qui est configuré de façon à déclencher l'activation du système de conditionnement d'air (2) du véhicule si lesdits premier et deuxième signaux de commande (12, 26) sont reçus, le système comprenant de plus une troisième unité de comparaison (28) configurée pour générer un troisième signal de commande (30) indiquant que le véhicule est en fonctionnement, et l'unité de commande (4) étant configurée de façon à déclencher l'activation du système de conditionnement d'air (2) du véhicule si ledit premier signal de commande (12), et, si cela est applicable, un deuxième signal de commande (26) et un troisième signal de commande (30), sont reçus, le véhicule étant en fonctionnement si sa vitesse actuelle v est au-dessus d'un niveau prédéterminé vₜ.

10. Système de régulation selon la revendication 9, dans lequel vₜ est situé dans la plage comprise entre 5 et 15 km/h.

11. Système de régulation selon la revendication 9 ou 10, dans lequel toute activation en cours est interrompue si la vitesse actuelle du véhicule descend en dessous dudit niveau prédéterminé vₜ.

12. Système de régulation selon l'une quelconque des revendications 9 à 11, dans lequel ledit premier intervalle t₁ est situé dans la plage comprise entre 4 et 10 jours.

13. Système de régulation selon l'une quelconque des revendications 9 à 12 en dépendance de la revendication 9, dans lequel ledit deuxième intervalle t₂ est situé dans la plage comprise entre 1 et 4 heures.

14. Système de régulation selon l'une quelconque des revendications 9 à 13, dans lequel l'activation du système de conditionnement d'air est effectuée si une ou plusieurs autres conditions de fonctionnement sont satisfaites.

15. Système de régulation selon l'une quelconque des revendications 9 à 14, dans lequel une période de fonctionnement approuvée du système de conditionnement d'air signifie un fonctionnement pendant un temps plus long qu'un temps de fonctionnement prédéterminé tₘ lorsque le véhicule est en fonctionnement.

16. Système de régulation selon l'une quelconque des revendications 9 à 15, dans lequel, lors de l'activation, le système de conditionnement d'air est connecté pendant un temps de fonctionnement prédéterminé tₘ.

17. Véhicule muni d'un ou de plusieurs systèmes de régulation selon les revendications 9 à 16.

18. Produit de programme d'ordinateur, qui est adapté de façon à être exécuté sur un dispositif à processeur de programme d'ordinateur pour un véhicule, et qui comprend des étapes de programme d'ordinateur pour exécuter le procédé selon l'une quelconque des revendications 1 à 8.
